# EUROPEAN PATENT APPLICATION

(11) **EP 0 996 221 A2**
(43) Date of publication of application: **26.04.2000**
(21) Application number: 99203411.6
(22) Date of filing: 18.10.1999
(51) Int. Cl.: H02P 3/06

(54) **Electric motor and power unit with improved braking characteristics**

(30) Priority: 21.10.1998 IT MI982263
(71) Applicant: AMETEK ITALIA S.r.l., 20087 Robecco sul Naviglio (Milano) (IT)
(72) Inventor: Baretella, Oscar, 20127 Milano (IT)
(74) Representative: Faraggiana, Vittorio, Dr. Ing.

(57) **Abstract**

A universal electric motor comprises an armature (11) and first field windings (12, 13) with a number N of turns designed to be connected to a power source for motor rotation and second braking windings (16, 17) with at least 1.1 x N turns and designed to be connected in parallel with the armature to generate a braking field when power is removed from the motor. A power unit comprises said motor and a switch (18) moving between a motor actuation position and a braking position. The switch (18) has contacts for connection of the field windings to a power supply line when it is in actuation position and for connecting the braking windings in parallel with the armature when it is in braking position. Advantageously there is a device (19) which is actuated after the start of braking for delayed connection of at least one field winding in parallel with the braking windings.

## Description

The present invention relates to a universal type electric motor equipped with an improved structure for its electric braking upon turning off. The present invention also relates to a power unit employing the improved structure of this motor.

In the art of electric motors the need for supplying adequate braking upon turning off since inertial continuation of rotation could become a source of considerable risk especially in the case of electric tools is known.

In tools equipped with universal motors powered with alternating current the expedient of connecting the armature and field windings in parallel upon turning off of the motor is often used so that the electromotive counter-force generated produces rotor braking action. The expedient is particularly economical but has the drawback of creating an erratic braking effect producing an intolerable initial current peak which in the long term destroys bushes and switch, especially for fast motors with considerable kinetic rotor energy to dissipate. The general purpose of the present invention is to overcome the above shortcomings by supplying a universal motor with structure embodied to supply a satisfactory electrical braking effect. A power unit employing such an electric motor is also supplied.

In view of this purpose it is sought to provide in accordance with the present invention a universal electric motor comprising an armature and first field windings with a number N of turns and designed to be connected to a power source for motor rotation and second braking windings with at least 1.1 x N turns and designed to be connected in parallel with the armature to generate a braking field when power is removed from the motor.

Again in accordance with the present invention it is sought to provide an electric power unit made up of a universal electric motor comprising an armature and first field windings with a number of turns N and a switch moving between a motor actuation position and a braking position with the motor comprising in addition second braking windings with at least 1.1 x N turns and the switch comprising contacts for connecting the field windings to a power supply line when it is in actuation position and for connecting the braking windings in parallel with the armature when in braking position.

To clarify the explanation of the innovative principles of the present invention and its advantages compared with the prior art there is described below with the aid of the annexed drawings a possible embodiment thereof by way of non-limiting example applying said principles. In the drawings:
FIG 1 shows a diagram of a power unit comprising a motor in accordance with the present invention connected to a control circuit, and
FIG 2 shows a diagrammatic view of a possible embodiment of a detail of FIG 1.

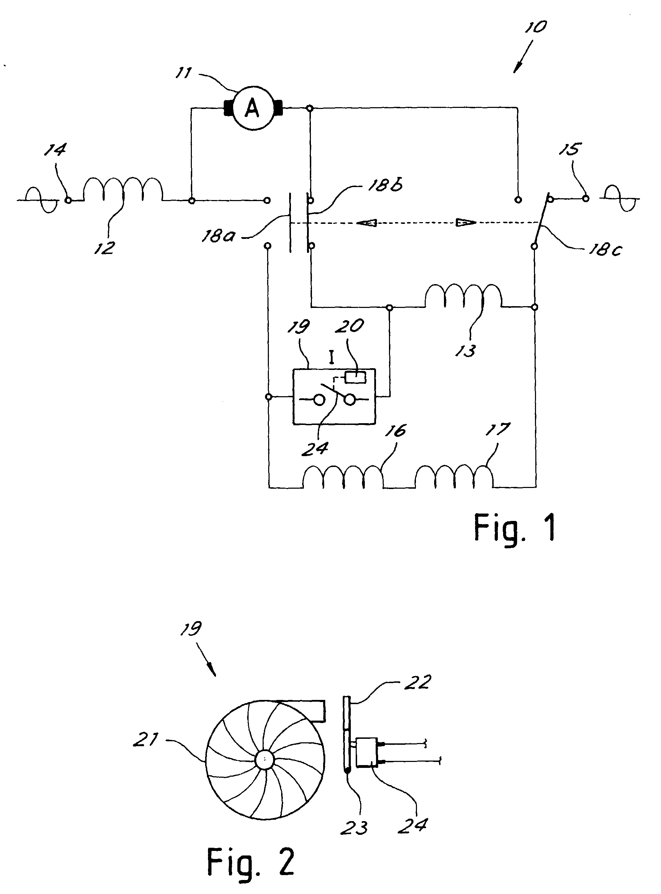

With reference to the above FIGS FIG 1 shows a power unit 10. In the power unit there is a universal electric motor comprising a rotor with armature 11 and a pair of field windings 12, 13.

In accordance with the present invention the motor also comprises a pair of additional braking windings 16, 17. It was found that these windings must have a number of loops 1.1 times and preferably 1.5 times and in particular more than 2 times the number of turns of the field windings. The choice of the exact value also depends on the magnetic characteristics of the lamination.

The braking windings must have electrical resistance greater than that of the field windings to obtain an acceptable initial braking current without damage to the brushes and commutator. It has been found advantageous that the braking winding resistance be at least twice that of the field windings. For this purpose the diameter of the braking winding wire is adequately less than that of the wire used in the field windings.

In use armature and field windings are designed to be connected in series together and powered by a single-phase electrical line as is normal for universal motors. The series of braking windings is designed to be placed in parallel with the armature when the series of field windings 12, 13 is disconnected from the mains. The braking windings thus generate a braking field which brakes the motor.

With a motor in accordance with the present invention the initial braking current is reduced and the magnetic braking flux is high and this ensures satisfactory steadiness of the braking effect.

Advantageously the filed windings are symmetrical. This considerable reduces radiofrequency disturbances in motor operation.

In the power unit in accordance with the present invention there is a switch 18 which moves between a motor actuation position (shown in the FIG) and a braking position. The switch 18 comprises moving contacts 18a, 18b, 18c for connecting when in actuation position of the series made up of field windings and armature to the power line 14, 15 and when in braking position for connecting the braking windings in parallel with the armature and disconnecting the motor from the line.

Advantageously the power unit comprises a device 19 with an electrical contact 24 for delayed connection of at least one field winding 13 in parallel with the braking windings after operation of the switch towards the braking position. In this manner braking time is further reduced because after the first braking phase performed with only the braking windings and after motor rotation speed has fallen by a certain percentage the braking field, whose effectiveness is reduced because of speed reduction and therefore braking current reduction, is increased by means of the connection of the winding 13.

The connection delay can be secured by making the device 19 in the form of a timer started by passage of the switch 18 from the operating position to the motor braking position. In other words the reference for connection of the winding is the time elapsed from the start of braking.

But it has been found particularly advantageous to make the delayed connection device in the form of a device sensitive to motor rotation speed or braking current. This device makes the connection in parallel when motor rotation speed and/or braking current falls below a preset value under which braking becomes insufficient. It has been found particularly advantageous that operation of the connection device take place when rotor speed falls below half the nominal motor rotation speed or, in case of current measurement, that braking current become half the initial current value.

The motor rotation speed sensitive device and the timer can be electronic or mechanical. Speed measurement can be direct or indirect like that performed with a speedometer dynamo or the like.

For example as shown diagrammatically in FIG 1 the speed sensitive device can include an electronic circuit 20 sensitive to electrical voltage or current generated by the rotor during braking. This voltage or current depends on rotation speed.

When voltage or current falls below a value determined to be the preset release speed the circuit connects the winding 13 in parallel with the braking windings. The practical embodiment of such electronic circuits is readily imaginable to those skilled in the art. FIG 2 shows diagrammatically a mechanical embodiment of the device 19. In this embodiment a fan 21 is actuated by the motor to generate an air flow or a vacuum which acts on a blade 22 hinged at 23.

The blade rests against the operating end of a normally closed microswitch 24 connected as shown in FIG 1 so that when motor rotation speed and hence the speed of the fan 21 is sufficient the air flow produced moves the blade until it actuates the switch 24 which is thus opened. When speed falls below a preset value air flow is reduced and the switch can go into its closed position. The fan can even be the cooling fan with which the motor can be equipped. It is noted that upon starting the motor goes from speed zero to its nominal speed in a time sufficiently short to make the momentary presence of the braking windings in parallel with one of the two field windings ineffective. Use of the air flow to create a vacuum instead of pressure is easy to imagine.

It is now clear that the preset purposes have been achieved by making available an electric motor and a power unit with it which allow effective braking in an economical manner without the disadvantages of the prior art.

Naturally the above description of an embodiment applying the innovative principles of the present invention is given by way of non-limiting example of said principles within the scope of the exclusive right claimed here. For example solutions with centrifugal switches actuated by motor rotation can be employed for delayed connection of the field winding.

## Claims

1. Universal electric motor comprising an armature (11) and first field windings (12, 13) with a number N of turns designed to be connected to a power source for motor rotation and second braking windings (16, 17) with at least 1.1 x N turns and designed to be connected in parallel with the armature to generate a braking field when power is removed from the motor.

2. Electric motor in accordance with claim 1 characterized in that the number of turns of the braking windings (16, 17) is more than 1.5N and in particular more than 2N.

3. Electric motor in accordance with claim 1 characterized in that the braking windings (16, 17) have electrical resistance at least twice the electrical resistance of the field windings (12, 13) to limit braking current.

4. Electric power unit made up of a universal electric motor comprising an armature (11) and first field windings (12, 13) with a number N of turns and a switch (18) moving between a motor actuation position and a braking position with the motor comprising in addition second braking windings (16, 17) with at least 1.1 x N turns and the switch (18) comprising contacts for connection of the field windings to a power supply line when it is in actuation position and for connecting the braking windings in parallel with the armature when it is in braking position.

5. Power unit in accordance with claim 4 characterized in that the number of turns of the braking windings is at least 1.5N and preferably at least 2N.

6. Power unit in accordance with claim 4 characterized in that it comprises a device (19) for delayed connection of at least one field winding in parallel with the braking windings after actuation of the switch towards the braking position.

7. Power unit in accordance with claim 6 characterized in that the delayed connection device (19) is made up of a motor rotation speed sensitive device which actuates said connection in parallel when motor rotation speed falls below a preset speed lower than nominal motor rotation speed.

8. Power unit in accordance with claim 7 characterized in that said preset speed is near 1/2 nominal speed.

9. Power unit in accordance with claim 7 characterized in that the speed sensitive device comprises a normally closed switch (24) for connection of at least one winding with the switch being actuated in the unconnected position by the air flow produced by a fan (21) actuated by the motor when motor speed is higher than said preset speed.

10. Power unit in accordance with claim 7 characterized in that the speed sensitive device comprises an electronic circuit (10) sensitive to the electric voltage or current generated by the rotor during braking and for connection of the at least one winding (13) when said voltage or current falls below a limit value determined to correspond to said preset speed.

11. Power unit in accordance with claim 10 characterized in that the current limit value is near 1/2 the braking start current.

12. Power unit in accordance with claim 6 characterized in that the delayed connection device (19) comprises a timer actuated by a braking start command and connecting the at least one field winding at the end of a time period preset therein.
